# EUROPEAN PATENT APPLICATION

(11) **EP 2 599 373 A1**
(43) Date of publication of application: **05.06.2013**
(21) Application number: 12447021.2
(22) Date of filing: 22.10.2012
(51) Int. Cl.: A01C 23/00, A01C 3/02, B01F 7/00

(54) **Pump device for pumping a substance, portable tank with such a device and method therefor**

(30) Priority: 30.11.2011 BE 201100698
(71) Applicant: Dezwaef NV, 8340 Moerkerke (BE)
(72) Inventor: Dezwaef, Filip, 8340 Moerkerke (BE)
(74) Representative: Van hunsel, Lieven M.S.

(57) **Abstract**

Pump device (12) for pumping a substance, containing a tubular body (19) with an insertion opening (25) on which can be mounted a semi-submersible pump (13), which is formed of a non-submersible portion (14) consisting of a housing (15) in which is provided a drive (16) and a submersible portion (17) containing a rotatable shaft (18) which can be coupled to the drive (16) and whereby, in the mounted condition of the pump (13) on the tubular body (19,) the submersible portion (17) is provided through the insertion opening (25), and whereby the drive (16) can operate bidirectionally so as to move a substance in the tubular body (19) from a first open end (21) to a second open end (22), and vice versa.

## Description

The present invention concerns a pump device for pumping a substance, such as manure or liquids or the like.

The invention also concerns a portable tank which is provided with such a pump device.

A portable tank for manure or liquids or the like mainly consists of the actual tank or the barrel which is usually provided on a chassis and of one or several wheel axles.

Further, such a portable tank usually comprises a first pump which can create an underpressure or an overpressure in the internal space in the barrel in relation to the atmospheric pressure outside.

Said first pump is usually provided outside the barrel, but it is connected via an appropriate line and a first passage in the casing of the barrel to the internal space of the barrel.

The first passage is usually provided on top of the barrel.

According to the present state of the art, a second passage and a third passage are usually provided, normally applied at a more accessible height near the bottom, either in the cylinder-shaped casing or in the front wall or the rear wall of the barrel, which are fitted with closing devices and couplers, with which a second line can be connected to the internal space of the barrel.

This second line and second or third passage can be used to suck in or discharge a substance, such as manure or liquids or the like.

The sucking or discharging is effected by appropriately controlling the first pump, such that an underpressure, an overpressure respectively is created in the internal space of the barrel.

In view of an accelerated suction, the second passage is fitted with a second pump which provides additional pump capacity for sucking in a substance, such as manure or liquids or the like.

In view of an accelerated discharge, the third passage is fitted with a third pump which provides additional pump capacity for discharging a substance, such as manure or liquids or the like.

The problem which then arises is that the second and third passage with the accompanying pumps should each obtain a place.

Moreover, it is inconvenient that the supply and discharge take place via different passages, whereas in practice the discharge and supply should ideally take place via one and the same connection to a van, whereby such a connection is preferably provided in a place which, depending on the application, can occupy different positions on the van.

Further, the pumps that are used are usually centrifugal pumps, which are quite expensive as such.

Moreover, the known pump devices require two such centrifugal pumps, namely one to supply a substance and one to discharge a substance, if the discharge as well as the supply is to be done in an accelerated manner without any complicated constructions being required.

Further, mounting and dismounting such pumps, for example for maintenance, is labour-intensive, although this is often required, since the substances which flow through the pumps are usually aggressive in nature and often contain hard parts or waste which can easily damage the pumps.

The present invention aims to provide a solution to one or several of the above-mentioned and possibly other disadvantages.

To this end, the present invention concerns a pump device for pumping a substance, such as manure or liquids or the like, containing at least the following elements:
- a tubular body through which the substance must be pumped, formed of a tube wall extending between a first open end and a second open end;
- an insertion opening provided in the tube wall of the tubular body; and,
- a semi-submersible pump which can be mounted on the insertion opening with a non-submersible portion which mainly consists of a housing in which is provided a drive and a submersible portion containing a rotatable shaft extending over a certain length from the non-submersible portion and which is coupled with one end or can be coupled to the drive for rotatably driving the shaft;
and whereby, when the pump is mounted on the tubular body, the submersible portion is provided through the insertion opening and extends in the tubular body, and the shaft is provided with a screw with two or more helical blades on its free other end, and whereby the drive can operate bidirectionally, i.e. can move the substance in the tubular body in a direction from the first open end to the second open end and vice versa.

A first advantage of such a pump device according to the invention is that only one passage may suffice to connect the pump device onto a van, which makes the choice of where to position such a passage considerably more easy.

The ideal positioning remains available indeed for both discharge and suction, since the semi-submersible pump of the pump device according to the invention is provided with a bi-directional drive.

A related advantage is that the lifting direction of the pump device can be easily readjusted by a simple operation and can effectively operate in both directions.

Another advantage of such a pump device according to the invention consists in that it can be efficiently maintained, as the semi-submersible pump can be very easily mounted in the tubular body or can be removed again from the tubular body, as will be further explained in more detail.

Yet another advantage of a pump device according to the invention is that a tanker can be efficiently filled and emptied with the pump device, whereas the cost price of the pump device remains rather limited, compared to the known pump devices.

According to a preferred embodiment, the screw, which is provided on a shaft and which comprises two or more screw blades, is **characterised in that** each of the screw blades, both viewed from the normal direction to the screw blade as well as from the direction perpendicular thereto and tangential to the screw, is mainly symmetrical.

A few degrees or millimetres of deviation may be considered, with the result that one of the directions of operation will operate more optimally than the other direction of operation.

The present invention also concerns an improved portable tank for transporting a substance, such as manure or liquids or the like, which is provided with a pump device according to the invention, which portable tank comprises a barrel which is provided with a first passage and an accompanying first pump which can create an underpressure or an overpressure in the internal space in the barrel in relation to the atmospheric pressure outside, and whereby the portable tank is provided with a second passage onto which the tubular body of the pump device is connected or can be connected.

An advantage of such a portable tank according to the invention is that the portable tank can be filled and emptied via one and the same passage, which makes it very practical in use.

The present invention also concerns a method for pumping a substance, such as manure or liquids or the like, which consists in:
- providing a semi-submersible pump having a non-submersible portion which mainly consists of a housing in which is provided a drive, and a submersible portion having a rotatable shaft extending over a certain length from the non-submersible portion and which is coupled to or can be coupled to the drive at one far end for rotatably driving the shaft, and whereby the drive can operate bidirectionally;
- mounting the semi-submersible pump on a tubular body which is formed of a tube wall extending between a first open end and a second open end so as to be able to pump the substance through the tubular body, by providing an insertion opening in the tube wall of the tubular body and applying the submersible portion through the insertion opening in the tube wall, such that this submersible portion extends in the tubular body;
- mounting a screw with two or more screw blades on the free other end of the shaft of the pump; and
- driving the drive in a first sense so as to move the substance in the tubular body in a direction from the first open end to the second open end, and vice versa so as to move the substance in the opposite direction.

In order to better explain the characteristics of the invention, the following preferred embodiment of a portable tank for manure or liquids or the like and an accompanying pump device according to the invention are described by way of example only, without being limitative in any way, in which:
figure 1 schematically represents a side view of a portable tank for transporting a substance such as manure or liquids or the like according to the invention;
figure 2 shows an improved pump according to the invention, seen in perspective;
figure 3 represents a section according to line III-III in figure 4;
figure 4 is a view according to arrow F4 in figure 3.

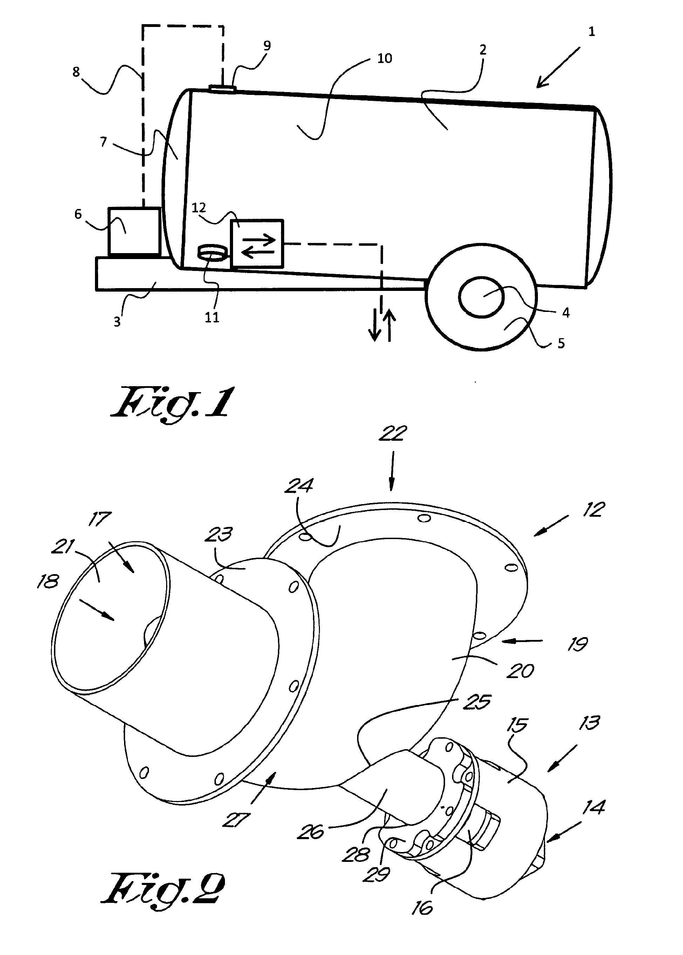

Figure 1 schematically represents a portable tank 1 for transporting manure or liquids or the like, which mainly consists of the actual tank or the barrel 2, provided on a chassis 3 in this case and on a single wheel axle 4 with accompanying wheels 5.

Further, such a portable tank 1 according to the invention comprises a first pump 6 which can create an underpressure or an overpressure in the internal space in the barrel 2 in relation to the atmospheric pressure outside.

Said first pump 6 is provided on the front of the barrel 2 in this case, more specifically on the front wall 7 of the barrel 2, i.e. the crosscut side wall farthest from the wheel axle 4.

The pump 6 is connected to the internal space of the barrel 2 via an appropriate first line 8 and a first passage 9 in the cylinder-shaped casing 10 of the barrel 2.

In particular, the first passage 9 is provided on top of the barrel 2 here.

A second passage 11 is provided in the cylinder-shaped casing 10 in this case, in particular on the left side when viewed from a position taken behind the portable tank 1, and practically at the bottom of the barrel 2 and near the front wall 7.

Onto this second passage 11 is connected a pump device 12 according to the invention, which can be operated in two directions according to the invention, i.e. it can move the manure or liquids or the like to the internal space of the barrel or away from the latter.

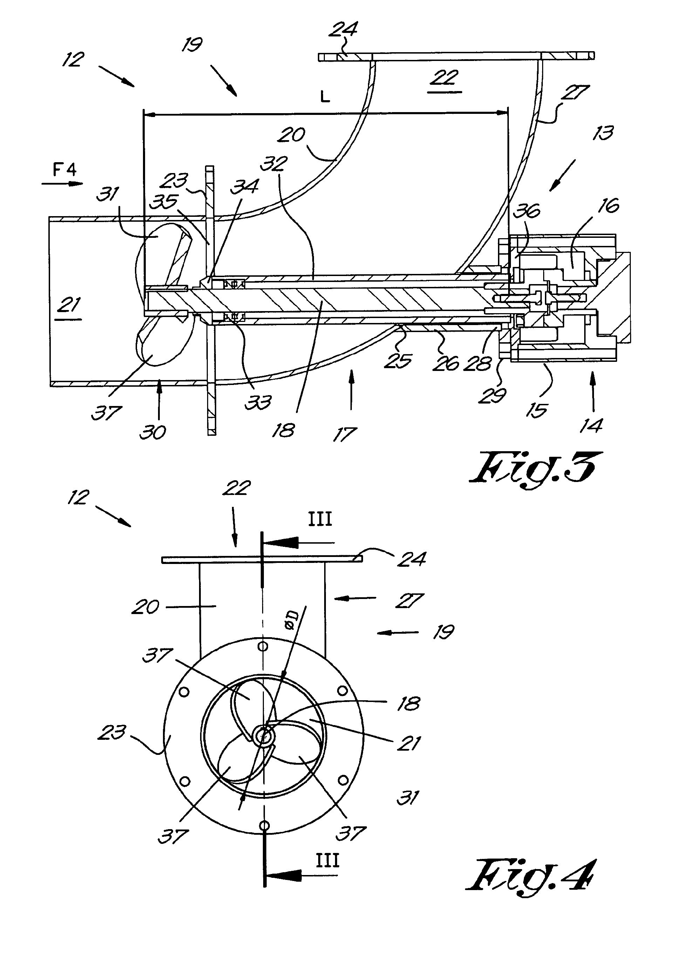

As is represented in more detail in figures 2 to 4, said pump device 12 according to the invention first of all comprises a semi-submersible pump 13.

The semi-submersible pump 13 has a non-submersible portion 14 which mainly consists of a housing 15 in which is provided a drive 16 and a submersible portion 17 comprising a rotatable shaft 18 extending over a certain length L from the non-submersible portion 14 and which can be coupled to the drive 16 at one end for rotatably driving the shaft 18.

The pump device 12 further contains a tubular body 19 designed to pump the substance through, which tubular body 19 is formed of a tube wall 20 extending between a first open end 21 and a second open end 22.

The tubular body 19 in this case forms an elbow 19 which is provided with a first flange 23 at a certain distance from the first open end 21, with which the tubular body 19 can be coupled to the second passage of the portable tank, as well as with a second flange 24 on the second open end 22, onto which second flange 24 can be coupled one or several extensions or a flexible tube or the like so as to supply the substance to the portable tank 1 or to drain the substance from the portable tank 1.

In the tube wall 20 of the tubular body 19 is further provided an insertion opening 25 in which the semi-submersible pump 13 can be mounted.

In order to mount the semi-submersible pump 13 on the tubular body 19, the submersible portion 17 is inserted through the insertion opening 23, such that this submersible portion 17 extends in the tubular body 19, where it is immersed as it were in the substance to be pumped.

In the embodiment as shown, the insertion opening 25 in the tubular body 19 of the pump device 12 forms an open end 25 of a tubular connecting piece 26, which is provided on the outside 27 of the tubular body 19 and which is provided with a flange 29 on its other open end 28.

This configuration is extremely practical since the semi-submersible pump 13, and in particular the non-submersible portion 14 thereof, can be mounted on the flange 29 of the connecting piece 26 simply by bolting it, or vice versa, the semi-submersible pump 13 can very easily be removed again for maintenance or repair by loosening the same bolts from said flange 29.

According to the invention, the rotatable shaft 18 of the submersible portion 17 of the pump 13, with the exception of a portion at the free end 30 of the shaft 18 which is intended for a screw 31, is enveloped by a static, enveloping, hollow tube 32 which is fixedly connected or fixedly mounted on the housing 15 of the non-submersible portion 14 of the pump 13.

This embodiment offers the advantage that the rotatable shaft 17 is protected from the substance to be pumped, thus avoiding that pieces of rope, wires, plastic packaging or strings of other materials would wind around the rotating shaft 17, thus damaging or blocking the pump 13.

The rotatable shaft 17 of the submersible portion 17 is further preferably supported by one or several bearings 33 in the static, enveloping tube 32 of the submersible portion 17.

In order to minimize vibrations on the bearings 33 coming from the drive 16, the bearing 33 or bearings 33 is/are preferably provided near the far end 30 of the rotatable shaft 18 according to the invention.

According to the invention, at the far end 30 of the submersible portion 17 which is designed for the screw 31 is further preferably provided a sealing 34 between the rotatable shaft 18 and the static, enveloping tube 32.

In this way is avoided that the substance might penetrate in the enveloping, static tube 32, thus hindering the rotation of the rotating shaft 18 or damaging the bearings 33.

Preferably, according to the invention, measures are also taken to ensure a good alignment of the rotating shaft 18 and to minimize vibrations due to a bad alignment or to eliminate them.

Such a measure may consist for example, as is also the case in the embodiment illustrated in the figures, in making sure that the static, enveloping tube 32 of the submersible portion 17, in the mounted condition, on the side of the screw 31 in the tubular body 19, is supported by zero or several supports 35 extending between the static, enveloping tube 32 and the tubular body 19.

Of course, said supports 35 should obstruct the passage of the substance through the tubular body 19 as little as possible, and therefore these supports 35 may for example simply consist of radially extending rods 35.

Another measure that promotes a good alignment of the shaft 18 and the drive 16 consists in also providing the far end of the enveloping, static tube 32 on the side of the drive 16 with a flange 36 which can co-operate with the flange 29 at the connecting piece 28 on the tubular body 19.

In this manner can be obtained a very precise embodiment of the different elements during the production, as well as a good alignment after the assembly.

According to the invention it is not excluded, and rather recommended to provide a seal (not represented in the figures) between the aforesaid flanges 29 and 36.

The seal is hereby squeezed between the flange 29 and the housing 15 of the drive 16 of the semi-submersible pump 13, over a relatively large surface, so that forces exerted on the seal, for instance due to vibrations coming from the drive, result in relatively small pressure changes in the sealing material and do not give rise to large deformations that could cause leaks.

As an alternative, the submersible portion 17 of the pump 13 can be sealed at the insertion opening 25 itself, where a weld is provided in the embodiment shown, but such a seal is much more prone to the occurrence of leaks due to vibrations of the drive 16 or due to a bad alignment of the shaft 18 and so on.

According to a preferred embodiment of a pump device 12 according to the invention, the submersible portion 17 and the non-submersible portion 14 of the pump device 12 are separate parts which can be coupled to one another.

This allows an easy mounting of the semi-submersible pump 13 in the tubular body 19.

After the submersible portion 17 has been mounted in the insertion opening 25 and in the supports 35 at the first flange 23, a screw 31 is to be mounted on the rotatable shaft 18.

This screw is provided with screw blades 37, three in this case, which are preferably such that each of the screw blades 37 of the semi-submersible pump 13, seen from the normal direction to the screw blade 37 as well as from the direction perpendicular thereto and tangential to the screw 31, is mainly symmetrical.

In addition, it is preferably made sure that the far ends of the screw 31, during a rotation, describe a circle having a diameter D which practically corresponds to the inner diameter of the tubular body 19, save for a certain play.

Further, according to the invention, the drive 16 can operate bidirectionally, whereby the sense of rotation of the screw 31 can be reversed, such that the substance can be made to move in the tubular body 19 in a direction from the first open end 21 to the second open end 22, but also vice versa.

It is clear that the tubular body 19 may have different dimensions, for example a section diameter D of 200 mm, 250 mm or 300 mm.

Also the dimensions and lengths of the tubular body 19 may be significantly different from what is represented in the figures. Indeed, by extending for example one far end of the elbow 19 to three or four metres, a suction arm is obtained which can be put directly in a slurry pit or another fluid reservoir.

The lengths of the shaft 18 and of the hollow tube 32 can then be adjusted accordingly, such that the screw 31 is put in an appropriate position in the tubular body 19.

It is clear that the number of screw blades 37 may also vary, but amounts to at least two.

The drive 19 is a hydraulic motor here, but it is clear that another drive can be used as an alternative.

The ideal position of the second passage 11 strongly depends on the user and the environmental parameters in which the portable tank 1 will be used.

It is clear that the second passage 11 can also be provided at the back or predominantly in the middle of the cylinder-shaped casing 10 of the portable tank 1, in the front wall 7 or the rear wall of the barrel 2.

The use of the portable tank 1 according to the invention is simple and as follows.

Suction is achieved by controlling the first pump 6 in an appropriate manner, such that an underpressure is created in the internal space of the barrel 2.

In order to ensure an accelerated suction, the pump device 12 is controlled in an appropriate manner by means of the drive 16, such that the substance, such as manure or liquids or the like, is made to move to the internal space of the barrel 2.

The drive 16, the shaft 18 and the screw 31 with the accompanying screw blades 37 will thereby rotate such that the substance is displaced towards the barrel 2.

This reduces the total filling time, for example from twenty minutes when only the first pump 6 is used to ten minutes when also the pump device 12 according to the invention is appropriately used.

It is clear that an appropriate operating unit and control unit can be provided for, such that when the first pump 6 is activated, also the pump device 12 will be automatically activated in the same sense.

On the other hand, discharging the substance which is stored in the barrel 2, such as manure or liquid or the like, is effected by controlling the first pump 6 appropriately and therefore inversely, such that an overpressure is created in the internal space of the barrel 2.

In order to ensure an accelerated discharge, the pump device 12 is controlled appropriately, such that the substance is moved away from the internal space of the barrel 2.

The drive 16, the shaft 18 and the screw 31 with the accompanying screw blades 37 will thereby rotate such that the substance is moved away from the barrel 2.

This considerably reduces the total unloading time.

An operating unit and control unit may be provided, requiring only one operation for the activation of the first pump 6 and automatically also the pump device 12 in the same sense for the discharge of the manure or liquids or the like.

The great advantage of such a portable tank 1 according to the invention with an accompanying pump device 12 is that no compromise needs to be made with regard to the choice of the position of the passage 11 which is used both for filling and unloading the barrel 2.

It is clear, however, that additional passages may be provided and that the pump device 12 can be connected to other passages by means of lines.

Moreover, the pump device 12 can also be provided with all the passages at a distance, for example in an intermediate position between different passages with which the latter can be connected, or for example in a suction arm which is mainly a long tube portion, for example having a length of three or four metres.

The present invention is by no means restricted to the embodiments described by way of example and represented in the figures; on the contrary, a pump device for pumping a substance, such as manure or liquids or the like, a portable tank provided with such a pump device, as well as a method for pumping such a substance according to the invention, can be made in many shapes and dimensions while still remaining within the scope of the invention.

## Claims

1. Pump device (12) for pumping a substance, such as manure or liquids or the like, **characterised in that** the pump device (12) contains at least the following elements:
- a tubular body (19) through which the substance is to be pumped, formed of a tube wall (20) extending between a first open end (21) and a second open end (22);
- an insertion opening (25) which is provided in the tube wall (20) of the tubular body (19); and,
- a semi-submersible pump (13) which can be mounted on the insertion opening (25) with a non-submersible portion (14) which mainly consists of a housing (15) in which is provided a drive (16) and a submersible portion (17) containing a rotatable shaft (18) extending over a certain length (L) from the non-submersible portion (14), and which is coupled at one far end or can be coupled to the drive (16) for rotatably driving the shaft (18); and whereby, when the pump (13) is mounted on the tubular body (19), the submersible portion (17) is provided through the insertion opening (25) and extends in the tubular body (19), and the shaft (18) is provided with a screw (31) with two or more screw blades (37) on its free other end (30) and whereby the drive (16) can operate bidirectionally, i.e. can make the substance move in the tubular body (19) in a direction from the first open end (21) to the second open end (22), and vice versa.

2. Pump device (12) according to claim 1, **characterised in that** the rotatable shaft (18) of the submersible portion (17) of the pump (13), with the exception of a portion at the free end (30) of the shaft (18) which is designed for the screw (31), is enveloped by a static, enveloping, hollow tube (32) which is fixedly connected or fixedly mounted on the housing (15) of the non-submersible portion (14) of the pump (13).

3. Pump device (12) according to claim 2, **characterised in that** at the far end (30) of the submersible portion (17) designed for the screw (31) is provided a seal (34) between the rotatable shaft (18) and the static, enveloping tube (32).

4. Pump device (12) according to claim 2 or 3, **characterised in that** the rotatable shaft (18) of the submersible portion (17) is supported by one or several bearings (33) in the static, enveloping tube (32) of the submersible portion (17).

5. Pump device (12) according to one or several of claims 2 to 4, **characterised in that** the static, enveloping tube (32) of the submersible portion (17), in the mounted condition, on the side of the screw (31) in the tubular body (19), is supported by one or several supports (35) extending between the static enveloping tube (32) and the tubular body (19).

6. Pump device (12) according to one or several of the preceding claims, **characterised in that** the submersible portion (17) and the non-submersible portion (14) of the pump device (12) are separate parts which can be coupled to one another.

7. Pump device (12) according to one or several of the preceding claims, **characterised in that** the insertion opening (25) in the tubular body (19) of the pump device (12) forms an open end (25) of a tubular connecting piece (26), provided in the outside (27) of the tubular body (19) and provided with a flange (29) at its other open end (28), whereby the semi-submersible pump (13) can be mounted on said flange (29).

8. Pump device (12) according to claim 7, **characterised in that** a seal is provided between the aforesaid flange (29) and the semi-submersible pump (13).

9. Pump device (12) according to one or several of the preceding claims, **characterised in that** the tubular body (19) forms an elbow (19) which is provided with two flanges (23,24).

10. Pump device (12) according to one or several of the preceding claims, **characterised in that** each of the screw blades (37) of the semi-submersible pump (13), both viewed from the normal direction to the screw blade (37) as well as from the direction perpendicular thereto and tangentially to the screw (31), is mainly symmetrical.

11. Pump device (12) according to one or several of the preceding claims, **characterised in that** the far ends of the screw (31), during a rotation, describe a circle having a diameter (D) which practically corresponds to the inner diameter of the tubular body (19), save for a play.

12. Portable tank (1) for transporting a substance, such as manure or liquids or the like, which is provided with a pump device (12) according to one or several of the preceding claims, **characterised in that** it comprises a barrel (2) provided with a first passage (9) and an accompanying first pump (6) which can create an underpressure or an overpressure in the internal space in the barrel (2) in relation to the atmospheric pressure outside, and whereby the portable tank (1) is provided with a second passage (11) onto which the tubular body (19) of the pump device (12) is connected or can be connected.

13. Portable tank (1) according to claim 12, **characterised in that** the first passage (9) is situated at the top of the barrel (2) and the second passage (11) is provided at the bottom of the barrel (2).

14. Method for pumping a substance, such as manure or liquids or the like, **characterised in that** it consists in:
- providing a semi-submersible pump (13) having a non-submersible portion (14) which mainly consists of a housing (15) in which is provided a drive (16), and a submersible portion (17) having a rotatable shaft (18) extending over a certain length (L) from the non-submersible portion (14) and which is coupled to or can be coupled to the drive (16) at one far end for rotatably driving the shaft (18), and whereby the drive (16) can operate bidirectionally;
- mounting the semi-submersible pump (13) on a tubular body (19) which is formed of a tube wall (20) extending between a first open end (21) and a second open end (22) so as to be able to pump the substance through the tubular body (19), by providing an insertion opening (25) in the tube wall (20) of the tubular body (19) and applying the submersible portion (17) through the insertion opening (25) in the tube wall (20), such that this submersible portion (17) extends in the tubular body (19);
- mounting a screw (31) having two or more screw blades (37) on the free other end (30) of the shaft (18) of the pump (13); and
driving the drive (16) in a first sense so as to move the substance in the tubular body (19) in a direction from the first open end (21) to the second open end (22), and vice versa for a reverse movement of the substance.
